# EUROPÄISCHE PATENTSCHRIFT

(11) **EP 1 970 460 B1**
(45) Veröffentlichungstag und Bekanntmachung des Hinweises auf die Patenterteilung: **21.01.2009**
(21) Anmeldenummer: 07103716.2
(22) Anmeldetag: 07.03.2007
(51) Int. Cl.: C22C 37/00

(54) **Gusseisen zur Herstellung von Bauteilen für Reibungsbremsvorrichtungen und Verfahren zur Herstellung des Gusseisens**
Cast iron for manufacturing parts for friction braking devices and method for producing the cast iron
Fonte destinée à la fabrication de composants pour dispositifs de frein à friction et procédé de fabrication de la fonte

(43) Veröffentlichungstag der Anmeldung: 17.09.2008
(73) Patentinhaber: Eisenwerk Arnstadt GmbH, 99310 Arnstadt (DE)
(72) Erfinder: Köcher, Udo, 98716 Geraberg (DE); Herzig, Uwe, 99310 Arnstadt (DE)
(74) Vertreter: Liedtke, Klaus

(56) Entgegenhaltungen:
- EP-A2- 0 277 931
- WO-A-81/01861
- JP-A- 6 287 676
- JP-A- 63 286 552
- ABBASI ET AL: "Effect of phosphorus as an alloying element on microstructure and mechanical properties of pearlitic gray cast iron" MATERIALS SCIENCE AND ENGINEERING A: STRUCTURAL MATERIALS: PROPERTIES, MICROSTRUCTURE & PROCESSING, LAUSANNE, CH, Bd. 444, Nr. 1-2, 9. Dezember 2006 (2006-12-09), Seiten 314-317, XP005799944 ISSN: 0921-5093

## Beschreibung

Die Erfindung betrifft ein Gusseisen zur Herstellung von Bauteilen für Reibungsbremsvorrichtungen und ein Verfahren zur Herstellung des Gusseisens.

Ein entsprechend phosphorhaltiges Gusseisen, aus dem sich verschleißfeste Bauteile für Reibungsbremsvorrichtungen von Schienenfahrzeugen herstellen lassen, ist aus der EP 0 277 931 B1 bereits bekannt. Das darin offenbarte, eine geringere Brinellhärte als 270 HB aufweisende Gusseisen soll aus 85 Gew.-% bis 95 Gew.-% Eisen, 2 Gew.-% bis 10 Gew.-% Phosphor, weniger als 6 % des Gesamtgewichts an Kohlenstoff und Silizium und weniger als 5 % des Gesamtgewichts aus den Metallen Mangan, Kobalt, Nickel, Vanadium, Wolfram und Molybdän zusammengesetzt sein. Der hohe Phosphorgehalt in Kombination mit den vorgesehenen Legierungselementen soll dabei eine gute Fließfähigkeit der Schmelze sicherstellen, wie sie für das maßhaltige Gießen der Legierung erforderlich ist.

Um eine gleichmäßige Verteilung des Phosphors in der Schmelze der bekannten Gusslegierung und eine genauere Dosierung des Phosphoranteils zu ermöglichen, soll der Phosphor als Ferrophosphor nicht dem Schmelzofen, sondern erst der Schmelze in der Gießpfanne oder einem speziellen Mischapparat zugeführt werden. Der bei Verwendung eines Kupolofens zum großen Teil aus dem Koks stammende Schwefelanteil soll zur Vermeidung von Lunkern und anderen Fehlstellen durch eine an den Schwefelgehalt angepasste Menge von Mangan neutralisiert werden.

Das bekannte Gusseisen weist ein Gefüge auf, das neben der perlitischen Grundstruktur über einen ausreichenden Ferritanteil mit lamellar ausgebildetem Graphit verfügt. Damit zeichnet sich das Gussmaterial bei insgesamt nicht zu großer Härte durch hohe Abrieb- bzw. Verschleißfestigkeit einerseits und durch gut wärmeleitende und schwingungsdämpfende Eigenschaften andererseits aus. Somit ist es in hohem Maße für die Anfertigung von Gussteilen geeignet, die im Betrieb hohen thermischen und mechanischen Belastungen ausgesetzt sind, wie dies z. B. bei Reibwerkstoffen von Reibungsbremsen der Fall ist.

Ein Nachteil des bekannten Gusseisens ist dessen relativ geringe Bruchfestigkeit, die durch den hohen Phosphoranteil des Werkstoffes bedingt ist. Prinzipiell gilt dabei der Zusammenhang, dass der Gusswerkstoff mit steigendem Phosphorgehalt immer spröder wird, so dass die Bruchdehnungseigenschaften des Materials entsprechend verschlechtert werden. Ohne den relativ hohen Phosphorgehalt stellt sich andererseits nicht die bei Reibwerkstoffen geforderte Verschleißfestigkeit bei entsprechend gutem Reibungskoeffizienten zwischen den Reibungspaar ein. Außerdem ist die Herstellung des Gusseisens relativ teuer, da das Verfahren zu seiner Erzeugung durch dem Erschmelzen des Eisengusses im Kupolofen nachgeschaltete Verfahrensschritte relativ umständlich ist.

Wegen der großen Sprödigkeit von Gusseisen mit hohem Phosphorgehalt ist es bei der Herstellung von Bremssohlen für Bremsschuhe von Serienschienenfahrzeugen aus diesem Gusseisen üblich, technisch aufwendige Konstruktionen aus Verbundmaterial vorzusehen, die zur Bruchsicherung des Gussteils eine Stahlarmierung aufweisen, wodurch ein relativ aufwendiges Herstellungsverfahren bedingt ist.

So wird bei einem aus der US 1,749,760 bekannten Herstellungsverfahren nach Duncan ein vorgefertigter Stahlblechrücken eines Bremsschuhs in eine Gießform eingelegt, von dessen konkaver Innenumfangsseite eine Vielzahl von Blechzungen radial abstehen. Aus den beiden Endbereichen des Stahlblechrückens sind ferner durch parallele Längseinschnitte zwei Blechlappen umschnitten, die etwa rechtwinklig um ihren Verbindungssteg abgebogen sind, so dass sie ebenfalls in radialer Richtung vom Innenumfang des Stahlblechrückens abstehen. Im Mittelbereich des Stahlblechrückens steht von dessen konvexer Rückseite, also in entgegengesetzter Richtung, eine U-förmige Brücke aus Blech ab, an welcher der Bremsschuh in seinem Einbauzustand zentral gehalten ist. Die seitlichen Schenkel dieser Brücke sind jeweils in ihrem unteren Endbereich abgewinkelt und an der Unterseite des Blechrückens mit diesem verschweißt. Nach dem Umgießen des Stahlblechrückens sind somit diese Blechzungen, die abgewinkelten Blechlappen der Endbereiche und auch die Schenkelenden der Brücke fest im Gusseisenmaterial verankert. Da der flüssige Eisenguss die verschiedenen zur Verankerung vorgesehenen Durchtrittsöffnungen im Blechrücken durchdringen muss, ist es schwierig, das Gussteil auf der die Brücke aufweisenden Rückseite maßhaltig zu gestalten, so dass zumindest die Rückseite des Blechrückens nach dem Gießvorgang intensiv nachbearbeitet werden muss. Auch ist der technische Aufwand zur Herstellung des Blechrückens trotz seiner integralen Ausbildung beträchtlich, zumal die gegossene Bremssohle über ihre gesamte Dicke von den abgewinkelten Blechlappen durchsetzt sein muss. Somit mag zwar durch auch bei Verwendung von Eisenguss mit hohem Phosphorgehalt die gewünschte Bruchsicherung gegeben sein, jedoch ist das Gussteil insgesamt teuer in der Herstellung.

Gleiches gilt für einen Bremsschuh für Reibungsbremsen von Schienenfahrzeugen, wie er aus der EP 0 026 578 A1 bekannt ist. Hierbei stehen von einem gebogenen Stahlrücken über dessen Länge verteilt mehrere Gussblöcke ab, die an den Stahlrücken angegossen sind, wobei sie jeweils durch radial vom Stahlrücken abstehende Metalleinlagen verstärkt sind. Die mit Abstand aneinandergereihten Gussblöcke des Bremsschuhs bilden gemeinsam dessen Bremssohle und sollen zur Erzielung der gewünschten Eigenschaften einen Phosphorgehalt von mehr als 5 Gew.-% aufweisen. Der Stahlrücken und die von diesem abstehenden Stahlverstärkungen der segmentierten Bremssohle müssen konstruktiv sehr biegesteif gestaltet werden, um ein Verkanten der Gussblöcke unter den auf ihre Reibseite einwirkenden Kräften beim Bremsvorgang zuverlässig zu verhindern. Ein solches Verkanten würde in unerwünschter Weise zu einem erhöhten Verschleiß der Bremssohle und zu einer verstärkten Riffelbildung an der Lauffläche des beaufschlagten Rades führen.

*In ABBASI ET AL Mat. Sci. and Engineering, ist ein Graugusseisen zur Herstellung von Bremssohlen beschrieben, welches einen hohen Anteil an Phosphor sowie Anteile von Kohlenstoff, Silizium und Mangan aufweist. Das Gefüge besteht aus lamellarem Graphit und hat eine Matrix aus Steadit und Perlit. Nachteilig ist hierbei eine geringe Bruchstabilität.*

Ferner ist es bekannt, einen Bremsklotzrücken mit hoher Festigkeit - z. B. aus Stahl- oder Sphäroguss - vorzugießen, diesen in die Gießform einzulegen und den phosphorhaltigeren Eisenguss der Bremssohle anzugießen. Hierdurch kann aber die konstruktiv mögliche Dicke der Bremssohle bei vorgegebenen Einbauverhältnissen deutlich reduziert sein, da der mit der Bremssohle versehene Bremsklotzrücken als Stahlguss- oder Kugelgraphitgussteil relativ dick sein muss. Außerdem verfügen Stahl- oder Sphäroguss nicht über ein vergleichbar vorteilhaftes Bruchdehnungsverhalten, wie es z. B. bei üblichen Knetlegierungen aus Stahlblech als Bruchsicherung der Fall ist. Zudem ist das Gießverfahren mit zwei Durchgängen zeitaufwendig und entsprechend teuer.

Von serienmäßig bei Schienenfahrzeugen eingesetzten Bremsschuhen ist es ferner bekannt, die Bremssohle aus phosphorhaltigem Eisenguss an einen gebogenen Stahlblechrücken anzugießen. Dieses Stahlblechteil umfasst auch eine bügelförmige Brücke, über die der Bremsschuh in seiner Einbaulage zentral an seinem Bremskopf gelagert ist, der beim Einleiten der Bremsung auf den Abrollumfang des zu bremsenden Rades zu bewegt wird. Auf der Innenumfangsseite des Blechrückens ist ein Flacheisen befestigt, das entsprechend dem Blechrücken gebogen ist und auf dem mehrere übereinandergeschichtete Lagen von Blechgittern aus Streckmetall durch Schweißen befestigt sind. Das Flacheisen und die Blechgitter erstrecken sich nahezu über die gesamte Umfangslänge des Bremsschuhs und die Blechgitter auch über die überwiegende Breite desselben. Beim Angießen der Bremssohle an den Stahlblechrücken werden Flacheisen und Blechgitter somit vollständig in den Guss der Bremssohle eingebettet, so dass sich ein festes Verbundteil ergibt. Die Bruchsicherheit und Funktionstüchtigkeit dieser bewährten Konstruktion ist zwar sehr groß, jedoch ist die Bremssohle fertigungstechnisch aufwendig gestaltet und entsprechend teuer in der Herstellung.

Der Erfindung liegt die Aufgabe zu Grunde, ein Gusseisen mit relativ hohem Phosphorgehalt zur Herstellung von Bauteilen für Reibungsbremsvorrichtungen *anzugeben, bei dem die Bruchgefahr trotz'eines hohen Phosphoranteils so gering ist, dass daraus auch mechanisch und thermisch hochbeanspruchte Bauteile ohne zusätzliche Verstärkungsmittel hergestellt werden können.*

Die Aufgabe wird erfindungsgemäß durch ein Gusseisen gelöst, *welches die in Anspruch 1 angegebnen Merkmale aufweist.*

Der Steadit besteht aus einem filigranen Netzwerk von ternärem Phosphideutektikum mit einer niedrigen Schmelztemperatur von ca. 950 Grad Celsius und erhöht die Verschleißfestigkeit des Gussteils in gewünschter Weise. Der überschüssige Kohlenstoff lagert sich - insbesondere im Übergangsbereich zum Steadit - als kompakter aber noch nicht sphärischer Lamellengraphit in das insgesamt feinkörnige Gefüge ein, wodurch eine verbesserte Wärmeleitfähigkeit und Schwingungsdämpfung des Gussteils erzielt wird. Die Menge des freien Graphits ergibt sich dabei aus dem etwa 2 % übersteigenden Gewichtsanteil an Kohlenstoff. Durch die Einlagerung des Kohlenstofrüberschusses als Lamellengraphit wird auch sichergestellt, dass die vorgegebene Härte des Werkstoffes eingehalten wird. Infolge des verbesserten Dämpfungsverhaltens ergibt sich zudem ein verbessertes Bruchdehnungsverhalten des Werkstoffes selbst. Die Bruchgefahr eines aus dem Gusseisen bestehenden Gussbauteils kann dadurch trotz des relativ hohen Phosphoranteils so stark zurückgehen, dass auch mechanisch und thermisch hochbeanspruchte Bauteile keiner zusätzlichen Verstärkungsmittel zum Bruchschutz bedürfen. Bei Bremssohlen der Bremsschuhe von Eisenbahnfahrzeugen, die hinsichtlich ihres Bruchverhaltens besonderen Sicherheitsanforderungen genügen müssen, kann das Bruchschutzsystem wegfallen oder zumindest technisch einfacher gestaltet werden, was bereits zu einem deutli chen Kostenvorteil bei der Herstellung des Bremsschuhs bzw. dessen Bremssohle führen kann.

Vorteilhafte Ausgestaltungen der Erfindung sind Gegenstand der Unteransprüche.

Um das gewünschte Gefüge zu erzielen, können der Basislegierung in relativ geringen Mengen die chemischen Elemente Kupfer und/oder Vanadium und/oder Cer und/oder Seltenerd-Mineralien bzw. Cer-Mischmetall zulegiert werden.

Als besonders geeignete Zulegierungsmittel haben sich Systeme von Kupfer und/oder Vanadium und von Cer und Seltenerd-Mineralien herausgestellt.

Der durch Zulegieren erreichte Kupfergehalt im Gusseisen soll im Ergebnis zwischen 0,40 Gew.-% und 1,20 Gew.-% und der durch Zulegieren erreichte Vanadiumgehalt zwischen 0,05 Gew.-% und 0,20 Gew.-% liegen. Die Menge des zulegierten Stoffes bzw. der zulegierten Stoffe ist dabei möglichst so zu wählen, dass die angegebenen Gewichtanteile nicht überschritten werden. So kann die Basisschmelze z. B. aufgrund von miterschmolzenem Schrott nicht genau bekannter Zusammensetzung durchaus bereits kleine Mengen Vanadium oder Kupfer enthalten.

Gleiches gilt für das System Cer und Seltenerd-Mineralien, das dem Basiseisen mit einem Anteil von 0,10 Gew.-% bis 0,40 Gew.-% zulegiert werden soll.

Das System Vanadium/Kupfer arbeitet mit einem Basiseisen von bis zu 0,20 Gew.-% Schwefel, während für das System Cer/Seltenerd-Mineralien ein schwefelarmes Basiseisen mit einem Gehalt von bis zu 0,05 Gew.-% Schwefel erforderlich ist. Für das System Cer/Seltenerd-Mineralien kann daher auch wegen des präziser kalkulierbaren Schwefelgehaltes der Schmelze die Verwendung eines elektrisch beheizbaren Schmelzofens zweckmäßiger sein als die Verwendung eines Kupolofens.

Um den erfindungsgemäßen Eisenguss besonders wirtschaftlich herstellen zu können, sollen dem Schmelzofen bereits bei der Erschmelzung des Gussmaterials bis zu 4 Gew.-% Phosphor zugegeben und zur Neutralisierung des Schwefels ein Manganüberschuss von 0,25 Gew.-% bis 0,55 Gew.-% eingestellt werden. Bei einer Zugabe von etwa 4 % Ferrophosphor ist sichergestellt, dass der vorgesehene Phosphorgehalt von 2,0 Gew.-% bis 3,5 Gew.-% im Basiseisen zuverlässig eingehalten wird. Die Differenz zwischen den Phosphormengen findet sich in der Schlacke des Gusseisens. Durch den eingestellten Manganüberschuss ist gewährleistet, dass der Aufbau des Gefüges nicht durch Vorliegen von ungebundenem Schwefel bzw. von Schwefelsulfiden beeinträchtigt wird.

Um beim Herstellen des Eisengusses die Kristallisation der Schmelze zu beschleunigen, ist zur Förderung der Keimbildung in der Schmelze eine Behandlung mit Impfmittel bzw. Impfmitteln vorgesehen. Vorteilhaft wird das Impfmittel bereits der Schmelze im Schmelzofen zugegeben, wenn das Gusseisen erschmolzen ist. Die ohnehin erforderliche Durchmischung der Schmelze im Schmelzofen beim Zulegieren der weiteren Legierungsbestandteile zur Basisschmelze kann dann zur intensiven Untermischung des Impfmittels mitgenutzt werden.

Die Impfbehandlungen sind mit handelsüblichen Impfmitteln wie Siliziumcarbid und/oder CaBaSi vorgesehen. Die Anzahl und Intensität der gebotenen Impfbehandlungen zur Förderung der Bildung von Kristallisationskeimen in der Schmelze hängt sowohl von der Legierung als auch von den Randbedingungen des Gießverfahrens ab. Für Impfbehandlungen von Metallschmelzen ist daher viel Erfahrung erforderlich, zumal selbst die Abkühlungsgeschwindigkeit des Gussstücks selbst und damit dessen Verhältnis von Volumen zu Oberfläche für die Kristallbildung von großer Bedeutung ist.

Als vorteilhaft hat sich bei Versuchen herausgestellt, wenn der Schmelze, insbesondere beim Zulegieren von Cer und/oder Seltenerd-Mineralien, ein Anteil von 0,05 Gew.-% bis 0,40 Gew.-% des Pfannenimpfmittels CaBaSi zugeführt wird.

Mit dem erfindungsgemäßen Gusseisen lassen sich insbesondere thermisch und mechanisch hoch beanspruchte Bremssohlen von Reibungsbremsen für Schienenfahrzeuge herstellen. Die Lebensdauer von Bremsklötzen bzw. Bremsschuhen von Reibungsbremsen für Schienenfahrzeuge, die mit solchen Bremssohlen versehen sind, ist etwa doppelt so hoch wie die Lebensdauer üblicher in Deutschland verwendeter Serienbremsklötze von Schienenfahrzeugen. Der Verschleiß des mit der Bremssohle zusammenwirkenden Rades nimmt dabei entgegen den Erwartungen nicht zu, sondern bleibt gleich oder nimmt sogar geringfügig ab.

Ein weiterer Vorteil der aus dem Gusseisen hergestellten Bremssohlen ist in dem verbesserten Reibwert zwischen Bremssohle und Lauffläche am Radumfang zu sehen, der insbesondere bei niedrigen Geschwindigkeiten des Schienenfahrzeugs zu einem verkürzten Bremsweg des Fahrzeugs führt.

Die für Reibungsbremsen typische, an sich aber unerwünschte Funkenbildung zwischen Lauffläche des Rades und Bremssohle nimmt bei Bremssohlen aus dem erfmdungsgemäßen Gusseisen merklich ab.

Da die Reibfläche der Bremssohle zudem schonender mit der Lauffläche des Rades zusammenwirkt, entsteht auf der Lauffläche eine geringere Riffelbildung. Als unmittelbare Folge davon vermindert sich das Abrollgeräusch des Laufrades entsprechend.

Wie bereits erwähnt, werden die mechanischen Eigenschaften des hochphosphorhaltigen Gusseisens insgesamt so entscheidend verbessert, dass die Anforderungen an ein wirksames Bruchschutzsystem für die Bremssohle zumindest deutlich reduziert werden können.

## Patentansprüche

1. Gusseisen zur Herstellung von Bauteilen für Reibungsbremsvorrichtungen, dessen Basiseisen weniger als 10 Gew.-% Phosphor, weniger als 6 % des Gesamtgewichts an Kohlenstoff und Silizium und weniger als 5 % des Gesamtgewichts aus anderen Legierungsmetallen enthält, wobei der in der Schmelze enthaltene Schwefel durch Mangan neutralisiert ist und das Gusseisen eine maximale Brinellhärte von 275 HB aufweist, wobei
das Basiseisen außer Eisen folgende im eutektischen Bereich liegende Zusammensetzung hat
| | |
|---|---|
| C | 2,6 bis 3,4 Gew.-% |
| Si | 1,2 bis 2,6 Gew.-% |
| P | 2,0 bis 3,5 Gew.-% |
| Mn | < 0,9 Gew.-% |
| S | < 0,2 Gew.-% |
und dass dem Basiseisen zur sicheren Einhaltung der Härte bei anteiliger Perlit- und Ferritausbildung mit einem Überschuss von lamellarem Graphit sowie zur Ausbildung eines hohen Anteils von niedrigschmelzendem Steadit im Gussgefüge mindestens 0,40 Gew.-% bis 1,20 Gew.-% Kupfer und/oder 0,05 Gew.-% bis 0,20 Gew.-% Vanadium zulegiert ist und dem Basiseisen 0,10 Gew.-% bis 0,40 Gew.-% Cer und/oder Seltenerd-Mineralien zulegiert sind, wobei das Basiseisen des Gusseisens für das Zulegieren von Cer und/oder Seltenerde-Mineralien einen Schwefelgehalt von maximal 0,05 Gew.-% aufweist.

2. Verfahren zur Erzeugung von Gusseisen nach Anspruch 1, **dadurch gekennzeichnet, dass** bereits im Schmelzofen mit der Erschmelzung des Gussmaterials bis zu 4 Gew.-% Phosphor zugegeben werden und dass zur Neutralisierung des Schwefels ein Manganüberschuss von 0,25 Gew.-% bis 0,55 Gew.-% eingestellt wird, wobei zur Förderung der Keimbildung in der Schmelze eine Behandlung mit Impfmittel vorgesehen ist, welches der Schmelze im Schmelzofen zugegeben wird, wobei die Impfbehandlungen mit Siliziumcarbid und/oder einem handelsüblichen Pfannenimpfmittel (CaBaSi) durchgeführt werden oder der Schmelze beim Zulegieren von Cer und/oder Seltenerd-Mineralien 0,05 Gew.-% bis 0,40 Gew.-% des Pfannenimpfmittels (CaBaSi) zugeführt werden.

## Claims

1. Cast iron for the production of component parts for friction brake mechanisms, the basic iron of which contains less than 10 % in weight of phosphorus, less than 6 % of the total weight of carbon and silicon and less than 5 % of the total weight of other alloy metals wherein the sulphur contained in the molten metal is neutralized by manganese and the cast iron presents a maximum Brinell hardness of 275 HB, wherein except for the iron, the basic iron has the following composition situated in the eutectic range
| | |
|---|---|
| C | 2.6 to 3.4 % in weight |
| Si | 1.2 to 2.6 % in weight |
| P | 2.0 to 3.5 % in weight |
| Mn | < 0.9 % in weight |
| S | < 0.2 % in weight |
and that, to safely maintain hardness with proportional perlite and ferrite formation with an excess of flake graphite and for the formation of a high proportion of low-melding steadite in the cast structure, a minimum of between 0.40 % in weight and 1.20 % in weight of copper and/or between 0.05 % in weight and 0.20 % in weight of vanadium is alloyed to the basic iron, and between 0.10 % in weight and 0.40 % in weight of Cer and/or rare earth minerals are alloyed to the basic iron, while the basic iron of the cast iron presents a maximum sulphur content of 0.05 % in weight for alloying in Cer and/or rare earth minerals.

2. Procedure for producing cast iron as claimed in claim 1, **characterized in that** up to 4 % in weight of phosphorus are added already during cast material making in the melting furnace and that a manganese excess of between 0.25 % in weight and 0.55 % in weight is set to neutralize the sulphur, while a treatment using an inoculating agent which is added to the molten metal in the melting furnace for promoting the formation of nuclei in the molten metal, while the inoculation treatments are carried out using silicon carbide and/or a commercially available ladle inoculation agent (CaBaSi) or between 0.05 % in weight and 0.40 % in weight of the ladle inoculation agent (CaBaSi) are fed to the molten material when alloying in Cer and/or rare earth minerals.

## Revendications

1. Fonte pour la fabrication de pièces pour des dispositifs de freinage à friction, dont le fer de base contient moins de 10 % en poids de phosphore, moins de 6 % du poids total en carbone et silicium et moins de 5 % du poids total en autres alliages métalliques, le soufre contenu dans la coulée étant neutralisé par du manganèse et la fonte présentant une dureté Brinell maximale de 275 HB,
**caractérisée en ce que**
le fer de base a la composition suivante, comprise dans la plage eutectique, sauf le fer :
| | |
|---|---|
| C | 2,6 à 3,4% en poids |
| Si | 1,2 à 2,6 % en poids |
| P | 2,0 à 3,5 % en poids |
| Mn | < 0,9 % en poids |
| S | < 0,2 % en poids |
**en ce qu'**au moins 0,40 % à 1,20 % en poids de cuivre et/ou 0,05 % à 0,20 % en poids de vanadium sont alliés au fer de base pour assurer le respect de la dureté pour une formation proportionnelle de perlite et de ferrite avec un excédent de graphite lamellaire, et pour former une part élevée de steadite à basse température de fusion dans la structure de solidification, et **en ce que** 0,10 % à 0,40 % en poids de Cer et/ou de minéraux de terres précieuses sont alliés au fer de base, le fer de base de la fonte pour l'alliage de Cer et/ou de minéraux de terres précieuses présentant une teneur maximale en soufre de 0,05 % en poids.

2. Procédé de production de fonte selon la revendication 1, **caractérisé en ce que** jusqu'à 4 % en poids de phosphore sont déjà ajoutés dans le four de fusion pour l'élaboration de la fonte, et **en ce qu'**un excédent de manganèse est défini entre 0,25 % et 0,55 % en poids pour la neutralisation du soufre, un traitement par agent inoculant ajouté au bain dans le four de fusion étant prévu pour favoriser la nucléation dans la coulée, les traitements inoculants étant réalisés avec du carbure de silicium et/ou un agent inoculant usuel pour poche de coulée (CaBaSi), ou de 0,05 % à 0,40 % en poids de l'agent inoculant pour poche de coulée étant ajoutés à la coulée lors de l'alliage de Cer et/ou de minéraux de terres précieuses.
